# EUROPEAN PATENT APPLICATION

(11) **EP 1 296 165 A2**
(43) Date of publication of application: **26.03.2003**
(21) Application number: 02250639.8
(22) Date of filing: 30.01.2002
(51) Int. Cl.: G02B 6/27

(54) **Interleaver**

(30) Priority: 25.09.2001 JP 2001291074
(71) Applicant: THE FURUKAWA ELECTRIC CO., LTD., Tokyo (JP)
(72) Inventor: Matsuura, Hiroshi, c/o Furukawa Electric Co., Ltd, Tokyo (JP); Yamagaki, Mieko, c/o Furukawa Electric Co., Ltd, Tokyo (JP); Yoon, Daeyoul, c/o Furukawa Electric Co., Ltd, Tokyo (JP); Wako, Sugio, c/o Furukawa Electric Co., Ltd, Tokyo (JP)
(74) Representative: Legg, Cyrus James Grahame

(57) **Abstract**

An interleaver comprises an input-output portion for receiving and outputting light, a light path shifting portion for shifting an optical path of the light, and a wavelength multiplexing-demultiplexing portion for demultiplexing the light to lights of different wavelengths or multiplexing incident lights.

## Description

### Field of the Invention

The present invention relates to an interleaver that extracts every other one of lights of different wavelengths from wavelength-multiplexed light in which lights of different wavelengths are multiplexed, and separately outputs the extracted lights to different channels, and multiplexes lights of different wavelengths and outputs the multiplexed light.

### Background of the Invention

In an optical fiber network, it is possible to multiplex lights of different wavelengths and transmit the multiplexed light over a single optical fiber by using the wavelength division multiplexing (WDM) techniques. The WDM techniques in this case requires means which demultiplexes wavelength-multiplexed light having lights of different wavelengths multiplexed into lights of individual wavelengths. An interleaver is used as a wavelength demultiplexing module that uses the property of a phase plate whose transmittance periodically changes depending on the wavelength of light.

The interleaver, as disclosed in, for example, U.S. Patent No. 6,169,604, uses two etalon units and a polarization beam splitter and demultiplexes wavelength-multiplexed light into lights of individual wavelengths using the effect of interference between lights of different wavelengths based on the principle of a Michelson's interferometer.

### SUMMARY OF THE INVENTION

It is an object of the present invention to provide an inexpensive and compact interleaver which can adequately demultiplex wavelength-multiplexed light into lights of individual wavelengths and multiplex lights of different wavelengths, and which does not use a polarization beam splitter.

To achieve the object, according to one aspect of the present invention, there is provided an interleaver which comprises an input-output portion for receiving and outputting light, a light path shifting portion for shifting an optical path of the light, and a wavelength multiplexing-demultiplexing portion for demultiplexing the light to lights of different wavelengths or multiplexing incident lights.

Other objects of the present invention as well as the features and advantages of the present invention will become more apparent from the detailed description given hereinafter in conjunction with the accompanying drawings.

### BRIEF DESCRIPTION OF THE DRAWINGS

Fig. 1A is a plan view illustrating an interleaver according to a first embodiment of the present invention;
Fig. 1B is a front view of Fig. 1A;
Fig. 2 is a plan view showing one example of a modified etalon unit which is used in the interleaver in Figs. 1A and 1B;
Fig. 3 is a plan view showing another example of the modified etalon unit that is used in the interleaver in Figs. 1A and 1B;
Figs. 4A through 4H are characteristic charts showing changes in the polarization direction of light traveling in the direction of an arrow in the interleaver in Figs. 1A and 1B after passing individual members;
Fig. 5 is a diagram showing the path of light of a wavelength of an odd channel which is included in light reflected from the modified etalon unit;
Fig. 6 is a diagram showing the path of light which is included in the light of the odd-channel wavelength in Fig. 5 and is reflected from an input-output portion;
Figs. 7A through 7H are characteristic charts showing changes in the polarization direction of light traveling in the direction of an arrow in Fig. 5 after passing individual members;
Fig. 8 is a diagram showing the path of light of a wavelength of an even channel which is included in light reflected from the modified etalon unit;
Fig. 9 is a diagram showing the path of light which is included in the light of the even-channel wavelength in Fig. 8 and is reflected from the input-output portion;
Figs. 10A through 10E are characteristic charts showing changes in the polarization direction of light traveling in the direction of an arrow in Fig. 8 after passing individual members;
Fig. 11 is a plan view illustrating an interleaver according to a second embodiment of the present invention;
Fig. 12A is a plan view showing the transmission path of light incident to a second incident port of a light input-output portion in the interleaver in Fig. 11;
Fig. 12B is a front view of Fig. 12A;
Figs. 13A through 13E are characteristic charts showing changes in the polarization direction of light traveling in the direction of an arrow in Figs. 12A and 12B after passing individual members;
Fig. 14 is a plan view showing the transmission path of light incident to a third incident port of a light input-output portion in the interleaver in Fig. 11;
Figs. 15A through 15H are characteristic charts showing changes in the polarization direction of light traveling in the direction of an arrow in Fig. 14 after passing individual members;
Fig. 16A is a plan view showing the path of light which is reflected from a modified etalon unit;
Fig. 16B is a front view of Fig. 16A; and
Figs. 17A through 17H are characteristic charts showing changes in the polarization direction of light traveling in the direction of an arrow in Figs. 16A and 16B after passing individual members.

### DETAILED DESCRIPTION OF THE INVENTION

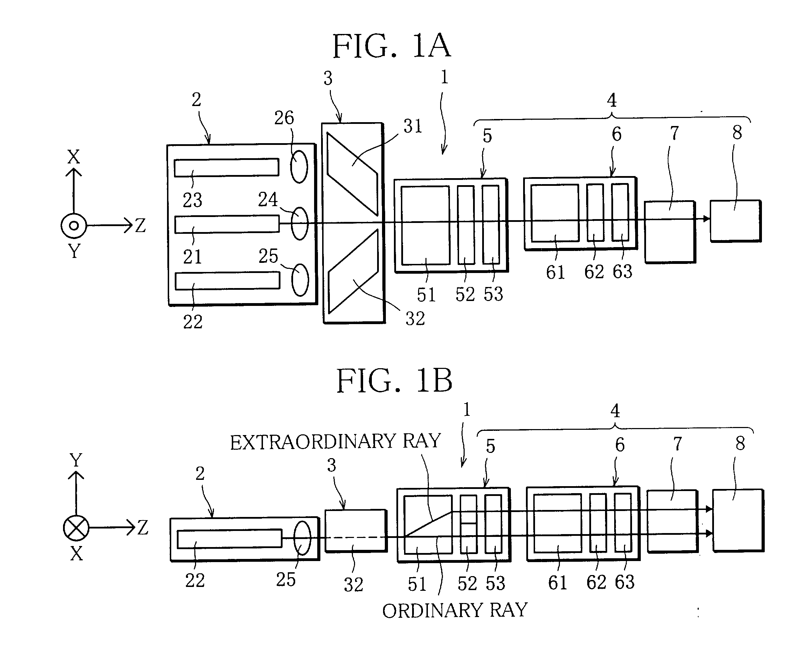

An interleaver according to one preferred embodiment of the present invention will now be described referring to Figs. 1 through 17H.

An interleaver 1, which serves as an optical demultiplexer, comprises an input-output portion 2 for receiving and outputting wavelength-multiplexed light, a light path shifting portion 3, and a wavelength multiplexing-demultiplexing portion 4.

The input-output portion 2 is a portion to which wavelength-multiplexed light is input and from which wavelength-multiplexed light is output. The input-output portion 2 is provided with collimating lenses 24 to 26 which respectively make pairs with three optical fibers 21 to 23. The collimating lenses 24 to 26 may be selected from a spherical lens, a gradient index lens, an aspherical lens and a GI (Graded Index) fiber lens.

The light path shifting portion 3 has two prisms 31 and 32 which shift the optical path of wavelength-multiplexed light coming from the input-output portion 2.

The wavelength multiplexing-demultiplexing portion 4 has first and second non-reciprocal optical circuits (hereinafter simply called "optical circuits") 5 and 6, a birefringent crystal 7 and a modified etalon unit 8. The wavelength multiplexing-demultiplexing portion 4 demultiplexes the input wavelength-multiplexed light into lights of different wavelengths.

The first optical circuit 5 converts circularly polarized light coming from the input-output portion 2 to linearly polarized light and outputs the linearly polarized light toward the second optical circuit 6. The first optical circuit 5 also converts linearly polarized light whose plane of polarization is perpendicular to the plane of polarization of the former converted linearly polarized light and which comes from the second optical circuit 6 to circularly polarized light, and outputs the circularly polarized light toward the input-output portion 2. As shown in Figs. 1A and 1B, the first optical circuit 5 has a birefringent crystal 51, a coupled phase plate 52 and a Faraday rotator 53.

The birefringent crystal 51 is a beam displacer which demultiplexes input light to two linearly polarized lights of an ordinary ray and an extraordinary ray in parallel and outputs the linearly polarized lights. The demultiplexing width of the parallel lights changes in accordance with the device length. The demultiplexing width b and the length L of the birefringent crystal 51 has a relation of 10 x b ≅ L. If the length L of the birefringent crystal 51 is sufficient, the prisms 31 and 32 are not necessary. Generally speaking, however, a birefringent crystal is more expensive than a prism. To provide the interleaver 1 at a low cost, therefore, it is better to make the length L of the birefringent crystal 51 shorter and provide the prisms 31 and 32. Available materials for the birefringent crystal 51 are, for example, rutile (TiO₂), calcite, quartz, lithium niobate crystal and yttrium orthvanadate (YVO₄).

As shown in Figs. 1A and 1B, the coupled phase plate 52 is two phase plates having a retardation of λ/2 arranged side by side in the direction of the Y axis given that the horizontal direction is the X axis, the vertical direction is the Y axis and the traveling direction of light is the Z axis. The coupled phase plate 52 rotates two linearly polarized lights output from the birefringent crystal 51 by 45 degrees in the opposite directions, thus yielding linearly polarized lights having the same polarization direction.

In the following description, the directions of the X axis, Y axis and Z axis are used as needed.

The Faraday rotator 53 rotates two linearly polarized lights output from the coupled phase plate 52 by 45 degrees in the same direction. Garnet or the like is used for the Faraday rotator 53.

The second optical circuit 6 outputs linearly polarized light, output from the first optical circuit 5 on the left-hand side in Figs. 1A and 1B, toward the birefringent crystal 7 on the right-hand side while keeping the plane of polarization. The second optical circuit 6 rotates linearly polarized light coming from the birefringent crystal 7 on the right-hand side by 90 degrees and outputs the resultant linearly polarized light toward the first optical circuit 5 on the left-hand side in Figs. 1A and 1B. As shown in Figs. 1A and 1B, the second optical circuit 6 has a birefringent crystal 61, a phase plate 62 and a Faraday rotator 63.

The crystal axis of the birefringent crystal 61 is set in such a way that two linearly polarized lights in the same polarization direction output from the Faraday rotator 53 pass the birefringent crystal 61 as ordinary rays. The aforementioned materials for the birefringent crystal 51 can also be used for the birefringent crystal 61.

The phase plate 62 rotates two linearly polarized lights having a retardation of λ/2 output from the birefringent crystal 61 by 45 degrees in the same direction.

The Faraday rotator 63 which is the same as the Faraday rotator 53 rotates two linearly polarized lights output from the phase plate 62 by 45 degrees in the opposite directions, thus yielding two linearly polarized lights in the same state as that of the linearly polarized lights that are input to the birefringent crystal 61.

The crystal axis of the birefringent crystal 7, like the birefringent crystal 61, is set in such a way that two input linearly polarized lights pass the birefringent crystal 7 as ordinary rays.

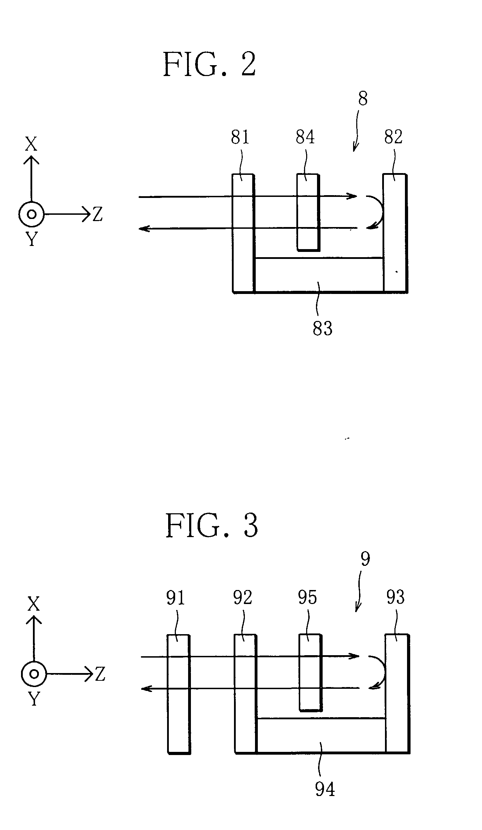

As shown in Fig. 2, the modified etalon unit 8 has a first phase plate 81, a mirror 82, a spacer 83 and a second phase plate 84. In the modified etalon unit 8, two linearly polarized lights output from the Faraday rotator 63 pass under a predetermined condition while experiencing a multiple beam interference and lights of wavelengths of an odd channel and an even channel are reflected in polarization states orthogonal to each other. Here, light of an odd-channel wavelength is light reflected in the same polarization state as that of input light and light of an even-channel wavelength is light reflected in a polarization state orthogonal to input light by 90 degrees.

The optical axis of the first phase plate 81 is inclined by 45 degrees to input linearly polarized light and the retardation is set to λ/6 to λ/10. The first phase plate 81 has an antireflection coating of a reflectance of about 18% applied to its inner surface which is located on that side of the second phase plate 84 and an antireflection coating applied to its surface which is located on that side of the birefringent crystal 7.

The mirror 82 has a full-reflection coating of a reflectance of 100% applied to the inner surface of its glass plate and an antireflection coating (e.g., a reflectance of 10 to 30%) applied to the outer surface.

The spacer 83 made of ceramic glass retains the distance between the first phase plate 81 and the mirror 82 at a high precision by an optical contact or an adhesive (e.g., epoxy-based adhesive, UV adhesive or the like) whose thickness is controlled to 5 µm or less, preferably 0.5 µm or less.

To allow the modified etalon unit 8 to demonstrate the desired performance, the spacer 83 is arranged in such a way that the parallelism of the first phase plate 81 and the mirror 82 becomes 1 minute or greater. For the same reason, the flatness of the antireflection coatings applied to the inner surfaces of the first phase plate 81 and the mirror 82 is set equal to or less than λ/10 (at λ = 633 nm).

The second phase plate 84 is arranged between the first phase plate 81 and the mirror 82 and its retardation is set to λ/3 to λ/5.

The modified etalon unit may be designed like a modified etalon unit 9 as shown in Fig. 3, which has a first phase plate 91, a first mirror 92, a second mirror 93, a spacer 94 and a second phase plate 95.

The first phase plate 91 is arranged adjacent to the birefringent crystal 7 and has its optical axis inclined by 45 degrees to input linearly polarized light and a retardation set to λ/6 to λ/10.

The first mirror 92 has a reflection coating of a reflectance of 10 to 30% applied to that side of its glass plate which is located on that side of the second phase plate 95.

The second mirror 93 has a reflection coating of a reflectance of 80 to 100% applied to the inner surface of its glass plate.

The spacer 94 made of ceramic glass retains the distance between the first mirror 92 and the second mirror 93 at a high precision by an optical contact or an adhesive (e.g., epoxy-based adhesive, UV adhesive or the like) whose thickness is controlled to 0.5 µm or less.

The second phase plate 95 has its optical axis inclined by 45 degrees to input linearly polarized light and a retardation set to λ/3 to λ/5.

The first mirror 92 and the second mirror 93 of the modified etalon unit 9, like the first phase plate 81 and the mirror 82 of the modified etalon unit 8, are arranged in such a way that the parallelism becomes 1 minute or greater and the flatness of the reflection coatings applied to the inner surfaces is set equal to or less than λ/10 (at λ = 633 nm).

The interleaver 1 of the present invention, which has the above-described structure, demultiplexes wavelength-multiplexed light externally input to the optical fiber 21 of the input-output portion 2 in the following manner and sends out the demultiplexed lights from the optical fiber 22 or the optical fiber 23.

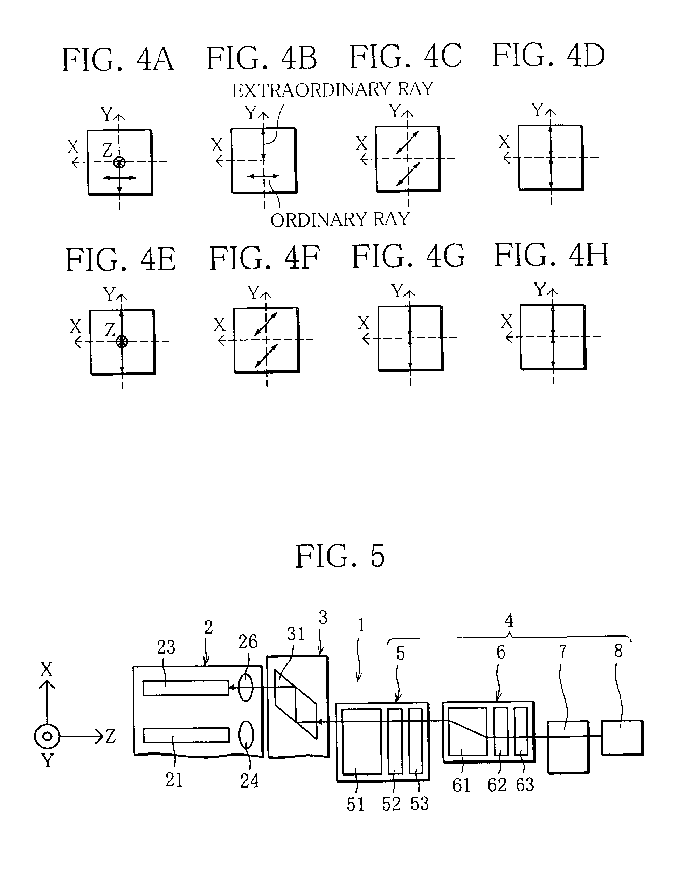

Specifically, as wavelength-multiplexed light input to the optical fiber 21 is output from the optical fiber 21, the light is diffused and input to the lens 24. The lens 24 makes the diffused wavelength-multiplexed lights in parallel and outputs the lights as collimated light. It is assumed that the collimated light output from the lens 24 is circularly polarized light as shown in Fig. 4A.

Then, the collimated light is input to the birefringent crystal 51 of the first optical circuit 5 and demultiplexed into two parallel linearly polarized lights of an ordinary ray and an extraordinary ray, whose planes of polarization are perpendicular to each other, as shown in Figs. 1B and 4B.

The coupled phase plate 52 rotates the planes of polarization of two linearly polarized lights by 45 degrees in the opposite directions. As a result, the linearly polarized lights have their polarization directions inclined by the same amount clockwise with respect to the Y axis, as shown in Fig. 4C.

Next, as the two linearly polarized lights pass the Faraday rotator 53, their planes of polarization are rotated by 45 degrees in the same direction (see Fig. 4D).

As shown in Fig. 4D, the two linearly polarized lights whose planes of polarization match with each other are input to the second optical circuit 6. Then, the birefringent crystal 61 directly passes the two linearly polarized lights without rotating their planes of polarization (see Fig. 4E).

Next, the phase plate 62 rotates the planes of polarization of the two linearly polarized lights clockwise by 45 degrees and transmits the linearly polarized lights as shown in Fig. 4F.

Then, as shown in Fig. 4G, the Faraday rotator 63 rotates the two linearly polarized lights counterclockwise by 45 degrees and transmits the linearly polarized lights.

The two linearly polarized lights that have passed the Faraday rotator 63 transmit the birefringent crystal 7 as ordinary rays as shown in Fig. 4H.

The two linearly polarized lights that have passed the birefringent crystal 7 this way are input to the modified etalon unit 8 and lights of an odd-channel wavelength and an even-channel wavelength are reflected in polarization states perpendicular to each other.

At this time, the light of an odd-channel wavelength that is reflected in the modified etalon unit 8 in the same polarization state as the input light propagates in the optical path of the interleaver 1 as shown in Fig. 5.

The planes of polarization of the two linearly polarized lights that are output from the modified etalon unit 8 are parallel to the Y axis as shown in Fig. 7A.

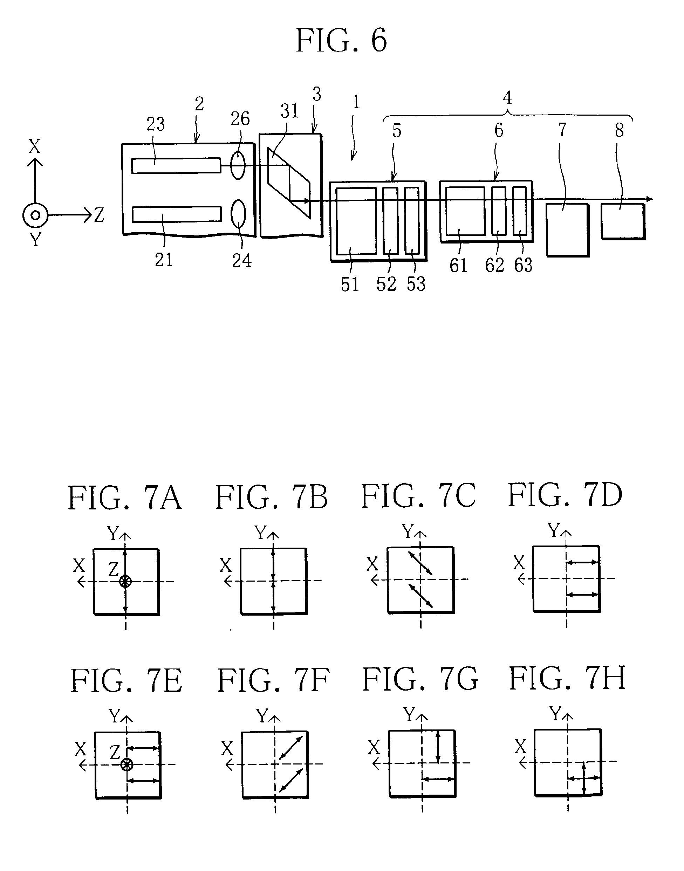

The two linearly polarized lights pass the birefringent crystal 7 as ordinary rays as shown in Fig. 7B.

The two linearly polarized lights that have passed the birefringent crystal 7 enter the second optical circuit 6 and their planes of polarization are rotated counterclockwise by 45 degrees by the Faraday rotator 63 as shown in Fig. 7C.

Next, the two linearly polarized lights are further rotated counterclockwise by 45 degrees by the phase plate 62 and pass the phase plate 62 as shown in Fig. 7D. Therefore, the two linearly polarized lights that have passed the phase plate 62 have their planes of polarization rotated by 90 degrees as compared with the two linearly polarized lights that have been output from the modified etalon unit 8 in the state shown in Fig. 7A.

Then, the two linearly polarized lights pass the birefringent crystal 61 as extraordinary rays (see Fig. 7E) and come out as shown in Fig. 5.

The two linearly polarized lights whose optical path has been shifted this way are input to the Faraday rotator 53 of the first optical circuit 5 and their planes of polarization are rotated counterclockwise by 45 degrees when transmitting as shown in Fig. 7F.

Then, the two linearly polarized lights are rotated by 45 degrees in the opposite directions by the coupled phase plate 52 and become two linearly polarized lights whose planes of polarization are perpendicular to each other as shown in Fig. 7G.

The two linearly polarized lights that are output from the coupled phase plate 52 this way are polarization-multiplexed by the birefringent crystal 51 and become circularly polarized light as shown in Fig. 7H.

The circularly polarized light is input to the prism 31 of the light path shifting portion 3 and its optical path is shifted, as shown in Fig. 5.

After the optical path is shifted by the prism 31, the circularly polarized light is condensed by the collimating lens 26 of the input-output portion 2 and is input to the optical fiber 23 from which the light is sent out of the interleaver 1.

At this time, the light is slightly reflected at the surface of the collimating lens 26.

The reflected light whose optical path is shifted by the prism 31 travels in the wavelength multiplexing-demultiplexing portion 4 in the direction of the modified etalon unit 8 as shown in Fig. 6.

Note that as the reflected light travels close to the upper side of the wavelength multiplexing-demultiplexing portion 4 in Fig. 6, it is not input to the birefringent crystal 7 and the modified etalon unit 8. Therefore, the interleaver 1 maximizes the isolation of the light of an odd-channel wavelength.

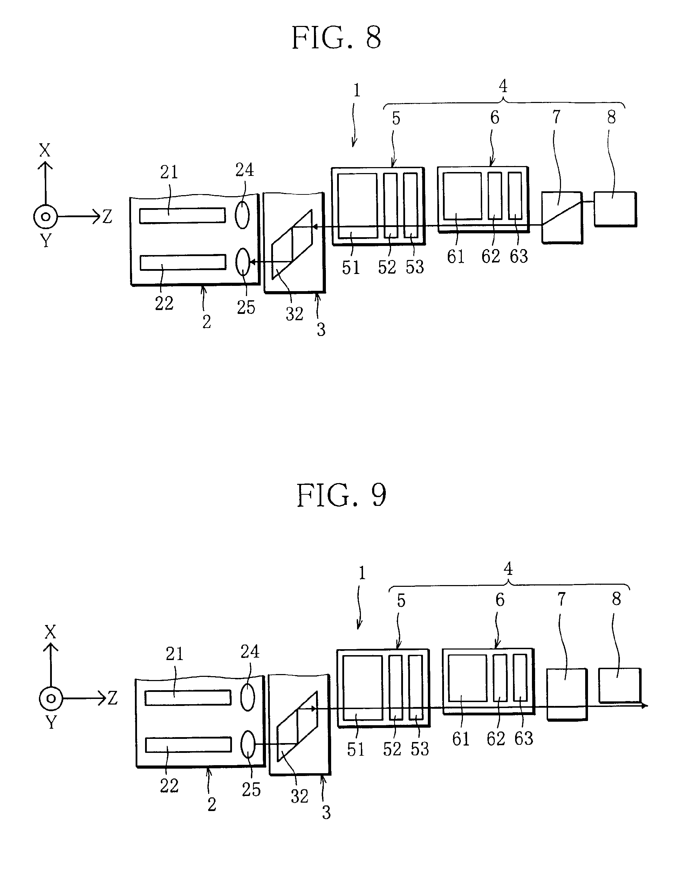

The light of an even-channel wavelength that is reflected in the modified etalon unit 8 in a polarization state perpendicular by 90 degrees to the incident light propagates in the optical path of the interleaver 1 as shown in Fig. 8.

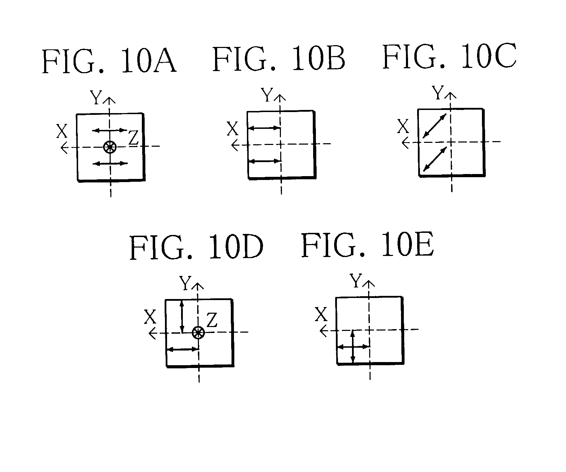

At this time, the planes of polarization of the two linearly polarized lights that have output from the modified etalon unit 8 are parallel to the X axis as shown in Fig. 10A.

While the two linearly polarized lights pass the birefringent crystal 7 as extraordinary rays, their planes of polarization are not rotated as shown in Fig. 10B.

Next, as the optical path of the two linearly polarized lights is shifted by the birefringent crystal 7 as apparent from Fig. 8, the two linearly polarized lights are not input to the second optical circuit 6 but input to the first optical circuit 5.

Then, the planes of polarization of the two linearly polarized lights are rotated counterclockwise by 45 degrees by the Faraday rotator 53 as shown in Fig. 10C.

Next, the two linearly polarized lights are rotated by 45 degrees in the opposite directions by the coupled phase plate 52 so that their planes of polarization become perpendicular to each other as shown in Fig. 10D.

The two linearly polarized lights that are output from the coupled phase plate 52 this way are polarization-multiplexed by the birefringent crystal 51 and become circularly polarized light as shown in Fig. 10E.

The circularly polarized light is input to the prism 32 of the light path shifting portion 3 and its optical path is shifted, as shown in Fig. 8.

After the optical path is shifted by the prism 32, the circularly polarized light is condensed by the collimating lens 25 of the input-output portion 2 and is input to the optical fiber 22 from which the light is sent out of the interleaver 1.

At this time, the light is slightly reflected at the surface of the collimating lens 25 as in the case of the collimating lens 26.

The reflected light whose optical path is shifted by the prism 32 travels in the wavelength multiplexing-demultiplexing portion 4 toward the modified etalon unit 8 as shown in Fig. 9.

Note that as the reflected light travels close to the lower side of the wavelength multiplexing-demultiplexing portion 4 in Fig. 9, it is not input to the second optical circuit 6 and the modified etalon unit 8. Therefore, the interleaver 1 maximizes the isolation of the light of an even-channel wavelength.

As apparent from the above, the interleaver 1 demultiplexes input wavelength-multiplexed light into light of an odd-channel wavelength and light of an even-channel wavelength at a high isolation ratio, and therefore demonstrates excellent characteristics as a light isolator.

At the time of this demultiplexing, unless the difference in optical path length between etalon units of the conventional interleaver is controlled precisely, wavelength-multiplexed light cannot adequately be demultiplexed to lights of individual wavelengths because of the increased polarization dependent loss. What is more, the use of two expensive etalon units disadvantageously makes the conventional interleaver expensive and large.

By way of contrast, the interleaver 1 of the present invention controls the difference in optical path length at high precision and uses only one etalon unit which is expensive, the interleaver 1 can be designed compact at a low cost.

The polarization beam splitter of the conventional interleaver is constructed by adhering prisms, to which dielectric coatings are applied, by an adhesive. Therefore, the conventional interleaver has an environment for adhesives to be present in the optical path of the polarization beam splitter and is thus not desirable from the viewpoint of reliability.

Because the interleaver 1 of the present invention uses no polarization beam splitter, such an adhesive does not environmentally exist, resulting in a higher reliability, favorably.

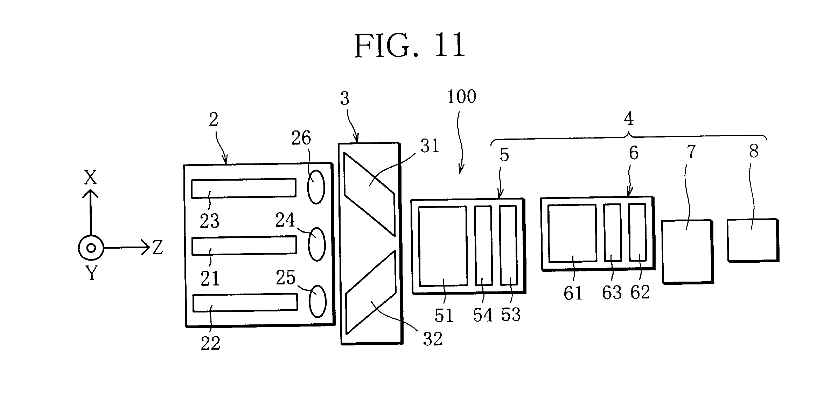

An interleaver according to another embodiment of the present invention which serves as an optical multiplexer will be described below with reference to Figs. 11 through 17H.

An interleaver 100 of the second embodiment has a structure similar to that of the interleaver 1 described above with reference to Figs. 1A through 10E. To avoid the redundant description, like or same reference numerals are given to those components which are the same as the corresponding components of the interleaver 1 in the following description and Figs. 11 through 17H.

The interleaver 100 is designed in such a way that, as shown in Fig. 11, with regard to the optical circuits 5 and 6 of the wavelength multiplexing-demultiplexing portion 4, a coupled phase plate 54 the direction of whose crystal axis is reversed to the direction of the crystal axis of the coupled phase plate 52 is used and the locations of the phase plate 62 and the Faraday rotator 63 are switched.

The interleaver 100 multiplexes lights externally input to the optical fiber 22 and the optical fiber 23 of the input-output portion 2 in the following manner and sends out the multiplexed light from the optical fiber 21.

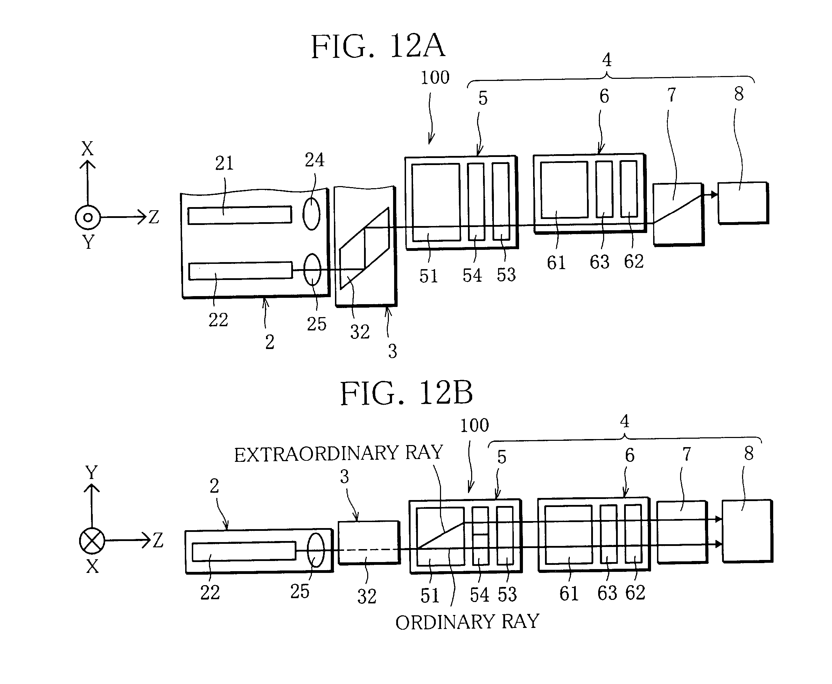

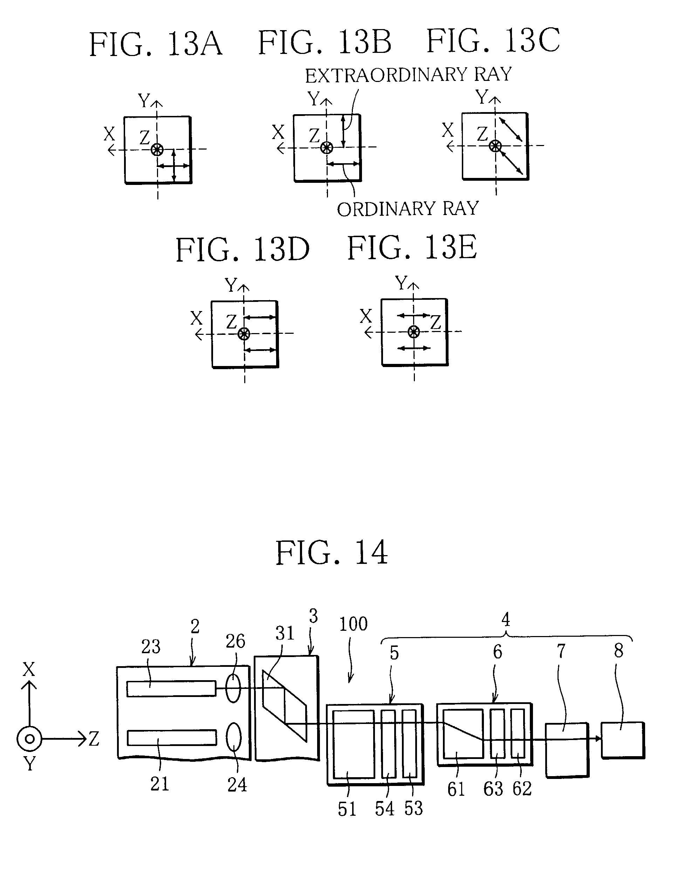

Specifically, as light input to the optical fiber 22 is output from the optical fiber 22, the light is diffused and input to the lens 25, as shown in Figs. 12A and 12B. The lens 25 makes the diffused lights in parallel and outputs the lights as collimated light. It is assumed that the collimated light output from the lens 25 is circularly polarized light as shown in Fig. 13A.

Then, the optical path of the collimated light is shifted by the prism 32 of the light path shifting portion 3, after which the collimated light is input to the birefringent crystal 51 of the first optical circuit 5, as shown in Figs. 12A and 12B. Then, the collimated light is demultiplexed by the birefringent crystal 51 into two parallel linearly polarized lights of an ordinary ray and an extraordinary ray, whose planes of polarization are perpendicular to each other, as shown in Figs. 12B and 13B.

The coupled phase plate 54 rotates the planes of polarization of two linearly polarized lights by 45 degrees in the opposite directions. As a result, the two linearly polarized lights have their polarization directions inclined by the same amount counterclockwise with respect to the Y axis, as shown in Fig. 13C.

Next, as the two linearly polarized lights pass the Faraday rotator 53, their planes of polarization are rotated counterclockwise by 45 degrees (see Fig. 13D).

The two linearly polarized lights whose planes of polarization match with each other as shown in Fig. 13D are input to the birefringent crystal 7 without entering the second optical circuit 6, as shown in Fig. 12A. Then, as shown in Figs. 12A and 13E, the birefringent crystal 7 shifts the optical path of the two linearly polarized lights without rotating their planes of polarization so that the two linearly polarized lights are input in this state to the modified etalon unit 8. That is, the birefringent crystal 7 passes the two linearly polarized lights which passed the Faraday rotator 53 as extraordinary rays.

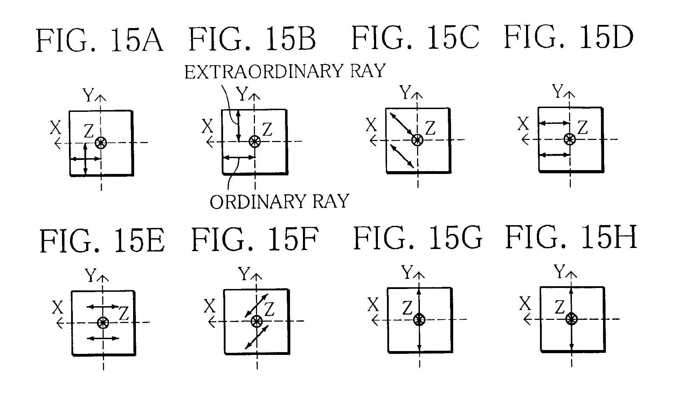

Meanwhile, as light input to the optical fiber 23 is output from the optical fiber 23, the light is diffused and input to the lens 26, and is output as parallel collimated light. It is assumed that the collimated light output from the lens 26 is circularly polarized light as shown in Fig. 15A.

Then, the optical path of the collimated light is shifted by the prism 31 of the light path shifting portion 3, after which the collimated light is input to the birefringent crystal 51 of the first optical circuit 5, as shown in Fig. 14. Then, the collimated light is demultiplexed by the birefringent crystal 51 into two parallel linearly polarized lights of an ordinary ray and an extraordinary ray, whose planes of polarization are perpendicular to each other, as shown in Fig. 15B.

The coupled phase plate 54 rotates the planes of polarization of two linearly polarized lights by 45 degrees in the opposite directions. As a result, the two linearly polarized lights have their polarization directions inclined by the same amount counterclockwise with respect to the Y axis, as shown in Fig. 15C.

Next, as the two linearly polarized lights pass the Faraday rotator 53, their planes of polarization are rotated counterclockwise by 45 degrees (see Fig. 15D).

The two linearly polarized lights whose planes of polarization match with each other as shown in Fig. 15D are input to the second optical circuit 6. Then, the birefringent crystal 61 passes the two linearly polarized lights as extraordinary rays without rotating their planes of polarization (see Fig. 15E), so that the optical path is shifted as shown in Fig. 14.

Then, as shown in Fig. 15F, the Faraday rotator 63 rotates the two linearly polarized lights counterclockwise by 45 degrees.

Next, the phase plate 62 rotates the planes of polarization of the two linearly polarized lights passed the Faraday rotator 63 counterclockwise by 45 degrees as shown in Fig. 15G.

The two linearly polarized lights that have passed the phase plate 62 directly pass the birefringent crystal 7 without rotating their planes of polarization as shown in Fig. 15H. That is, the birefringent crystal 7 directly passes the two linearly polarized lights passed the phase plate 62 as ordinary rays.

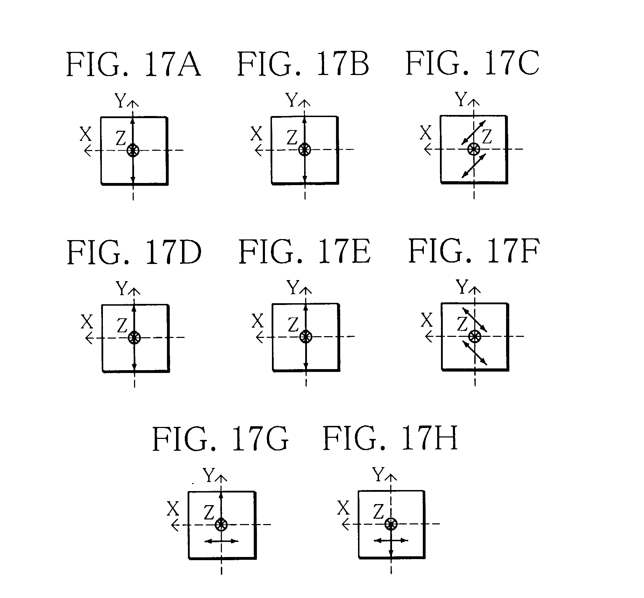

Therefore, two linearly polarized lights that have a vertical plane of polarization and a horizontal plane of polarization are input to the modified etalon unit 8. The two linearly polarized lights input this way are multireflected in the modified etalon unit 8 shown in Fig. 2 and the planes of polarization of the linearly polarized lights to be output have vertical planes of polarization as shown in Fig. 17A.

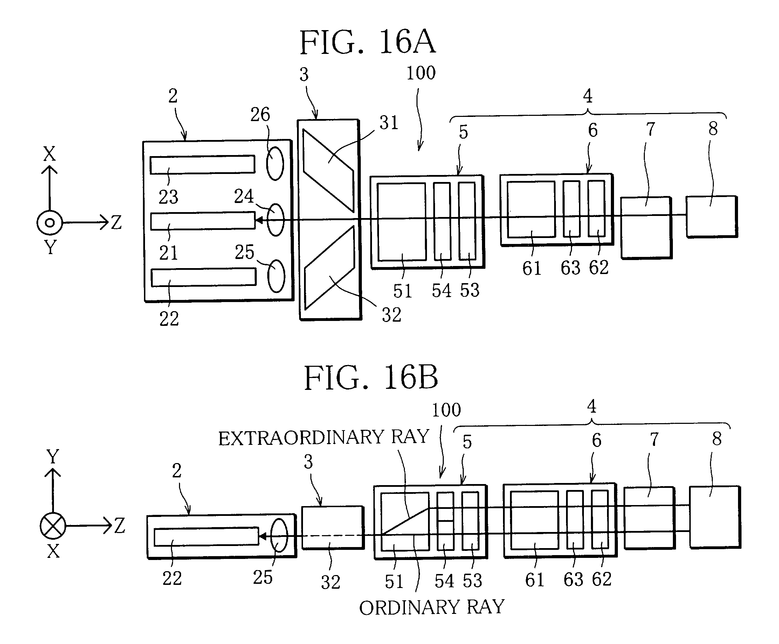

At this time, the light that is reflected in the modified etalon unit 8 propagates in the optical path of the interleaver 100 as shown in Figs. 16A and 16B.

The two linearly polarized lights that have been output from the modified etalon unit 8 pass the birefringent crystal 7 as ordinary rays as shown in Fig. 17B.

The two linearly polarized lights that have passed the birefringent crystal 7 enter the second optical circuit 6 and their planes of polarization are rotated clockwise by 45 degrees by the phase plate 62 as shown in Fig. 17C.

Next, the planes of polarization of the two linearly polarized lights are rotated counterclockwise by 45 degrees by the Faraday rotator 63 so that the polarization states become linearly polarized states as shown in Fig. 17D. Therefore, the two linearly polarized lights that have passed the Faraday rotator 63 are in the same polarization states as those of the linearly polarized lights output from the modified etalon unit 8 as shown in Fig. 17A.

Then, the two linearly polarized lights directly pass the birefringent crystal 61 as ordinary rays and are input to the Faraday rotator 53 of the first optical circuit 5.

The planes of polarization of the two linearly polarized lights are rotated counterclockwise by 45 degrees by the Faraday rotator 53, as shown in Fig. 17F.

Then, the planes of polarization of the two linearly polarized lights are rotated in the opposite directions by 45 degrees by the coupled phase plate 54, so that their planes of polarization become perpendicular to each other as shown in Fig. 17G.

The two linearly polarized lights that are output from the coupled phase plate 54 this way are polarization-multiplexed by the birefringent crystal 51.

The polarization-multiplexed light is condensed by the collimating lens 24 of the input-output portion 2 and is sent out of the interleaver 100 as shown in Fig. 16A.

## Claims

1. An interleaver comprising:
an input-output portion (2) for receiving and outputting light;
a light path shifting portion (3) for shifting an optical path of said light; and
a wavelength multiplexing-demultiplexing portion (4) for demultiplexing said light to lights of different wavelengths or multiplexing incident lights.

2. The interleaver according to claim 1, wherein said input-output portion (2) has plural pairs of light waveguide means and collimating lenses.

3. The interleaver according to claim 1 or claim 2 wherein said light path shifting portion (3) has a plurality of prisms.

4. The interleaver according to any one of claims 1 to 3, wherein said wavelength multiplexing-demultiplexing portion (4) has first and second non-reciprocal optical circuits (5,6), a birfringent crystal (7) and a modified etalon unit.

5. The interleaver according to claim 4, wherein said first non-reciprocal optical circuit (5) converts circularly polarized light entering from one side of said first non-reciprocal optical circuit (5) to linearly polarized light and outputting said linearly polarized light from an other side of said first non-reciprocal optical circuit (5), and converts linearly polarized light whose plane of polarization is perpendicular to plane of polarization of said converted linearly polarized light and which enters from said other side to circularly polarized light and transfers said converted circularly polarized light to said other side.

6. The interleaver according to claim 4 or claim 5, wherein said second non-reciprocal optical circuit (6) outputs that linearly polarized light which comes from said other side of said first non-reciprocal optical circuit (5) and which enters from one side of said second non-reciprocal optical circuit (6) to an other side of said second non-reciprocal optical circuit (6) while keeping plane of polarization of said linearly polarized light, and outputs that linearly polarized light whose plane of polarization is perpendicular to said plane of polarization of the former linearly polarized light and which enters from said other side of said second non-reciprocal optical circuit (6) to said one side of said second non-reciprocal optical circuit (6) as linearly polarized light whose plane of polarization is rotated by 90 degrees.

7. The interleaver according to any one of claims 4 to 6, wherein said modified etalon unit has a first phase plate having a primary optical axis inclined by 45 degrees to incident linearly polarized light and a retardation of λ/6 to λ/10, a first mirror having a reflectance of 10 to 30%, a second mirror having a reflectance of 80 to 100%, a spacer for holding said first mirror and said second mirror at a predetermined distance, and a second phase plate located between said first mirror and said second mirror and having a retardation of λ/3 to λ/5.

8. The interleaver according to any one of claims 4 to 6, wherein said modified etalon unit has a first phase plate having a primary optical axis inclined by 45 degrees or -45 degrees to incident linearly polarized light and a retardation of λ/6 to λ/10, a mirror, a spacer for holding said first phase plate and said mirror at a predetermined distance, and a second phase plate located between said first phase plate and said mirror and having a retardation of λ/3 to λ/5.

9. The interleaver according to claim 8, wherein said first phase plate has a reflection film having a reflectance of 10 to 30% and formed on that surface of said first phase plate which faces said second phase plate.

10. The interleaver according to claim 8, wherein said mirror has a reflectance of 80 to 100%.
